# EUROPEAN PATENT APPLICATION

(11) **EP 2 408 049 A1**
(43) Date of publication of application: **18.01.2012**
(21) Application number: 11173833.2
(22) Date of filing: 13.07.2011
(51) Int. Cl.: H01M 8/02, H01M 8/12, H01M 8/24

(54) **Interconnector and fuel cell having the same**

(30) Priority: 16.07.2010 KR 20100069034
(71) Applicant: Samsung SDI Co., Ltd., Yongin-si, Gyeonggi-do (KR)
(72) Inventor: Kong, Sang-Jun, Gyeonggi-do (KR); Yoon, Duk-Hyoung, Gyeonggi-do (KR); Kwon, Tae-Ho, Gyeonggi-do (KR)
(74) Representative: Walaski, Jan Filip

(57) **Abstract**

A bundle-type interconnector is used in a fuel cell. In one embodiment, a bundle-type interconnector includes an interconnector and a plurality of projections. A plurality of accommodating grooves are formed in the interconnector, and the interconnector has conductive connection members that electrically connect the interiors of the accommodating grooves. Each of the projections is inserted into the accommodating groove, and a conductive material is coated on an outer surface of each of the projections. Accordingly, a cell bundle can be configured regardless of opened and closed interconnectors and the connection structure thereof, and maintenance and repair can be easily performed during the operation of the fuel cell.

## Description

The present invention relates to an interconnector and a fuel cell having the same, particulary to a bundle-type interconnector.

Since the voltage of a unit cell by itself is relatively low in a fuel cell, a plurality of unit cells are connected in parallel and/or series to one another so as to obtain desired current and voltage. A set of a plurality of unit cells is referred to as a stack.

If unit cells are independently managed, the operation of the entire fuel cell system is stopped, and maintenance and repair are necessarily performed with respect to the entire stack even when only a portion of the unit cells has a defect.

Aspects of embodiments according to the present invention are directed toward interconnectors that constitute a cell bundle and a cell bundle structure connected through the interconnectors.

According to an embodiment of the present invention, there is provided a bundle-type interconnector including an interconnector and a plurality of projections. A plurality of accommodating grooves are formed in the interconnector, and the interconnector has conductive connection members that electrically connect interiors of the accommodating grooves. Each of the projections is inserted into a corresponding one of the accommodating grooves, and a conductive material is formed on an outer surface of each of the projections.

The conductive connection member may electrically connect a pair of the accommodating grooves to each other.

The conductive connection member may electrically connect adjacent ones of the accommodating grooves.

The conductive connection member may pass through a portion of the interconnector to electrically connect bottoms of adjacent ones of the accommodating grooves.

The interconnector may have a through-hole that passes through a portion of the interconnector at a bottom surface of one of the accommodating grooves, and the projection may have a through-hole that passes through a portion of the projection in a center axis direction of the projection.

One end of the projection, exposed outside of the accommodating groove, may be finished with an insulating material.

The conductive connection member may include at least one selected from the group consisting of nickel, copper, silver, and an alloy thereof.

The conductive material coated on the projection may include at least one selected from the group consisting of nickel, copper, silver, and an alloy thereof.

According to an embodiment of the present invention, there is provided a fuel cell including a unit cell bundle. The unit cell bundle includes a pair of interconnectors, a plurality of projections and a plurality of unit cells.

A plurality of accommodating grooves are formed in each of the pair of interconnectors, and each of the pair of interconnectors has conductive connection members at bottom surfaces of the accommodating grooves to electrically connect adjacent ones of the accommodating grooves to each other. A conductive material is coated on an outer surface of each of the projections, and the projections are inserted into every other one of the accommodating grooves. The unit cells have a tubular shape, each of the unit cells including a first electrode layer, an electrolytic layer and a second electrode layer stacked in a radial direction from a centre axis thereof. An exposed portion in which a portion of the first electrode layer is exposed is located at one end of each of the unit cells, and an extended portion formed by extending the second electrode layer beyond the first electrode layer is at the other end of each of the unit cells. The exposed portion is inserted into a corresponding one of the accommodating grooves, and the extended portion accommodates a corresponding one of the projections so that the unit cells are electrically connected in series to one another.

A through-hole that passes through a portion of the interconnector may be formed at the bottom surface of one of the accommodating grooves, and a through-hole that passes through the projection in a center axis direction of the projection may be formed in the projection.

One end of the projection, inserted into a corresponding one of the unit cells, may be finished with insulating material.

According to another embodiment of the present invention, there is provided a fuel cell including a unit cell bundle. The unit cell bundle includes a pair of interconnectors, a plurality of projections and a plurality of unit cells.

A plurality of accommodating grooves are formed in each of the pair of interconnectors, and each of the pair of interconnectors has conductive connection members that electrically connect interiors of the accommodating grooves. A conductive material is coated on an outer surface of each of the projections, and the projections are inserted into all of the accommodating grooves of one of the interconnectors. The unit cells have a tubular shape, each of the unit cells including a first electrode layer, an electrolytic layer and a second electrode layer stacked in a radial direction from a center axis thereof. An exposed portion in which a portion of the first electrode layer is exposed is located at one end of each of the unit cells, and an extended portion formed by extending the second electrode layer beyond the first electrode layer is at the other end of each of the unit cells. The exposed portion is inserted into a corresponding one of the accommodating grooves, and the extended portion accommodates a corresponding one of the projections so that the unit cells are electrically connected in parallel to one another.

The conductive connection member may pass through a portion of the interconnector to electrically connect bottoms of adjacent ones of the accommodating grooves.

A through-hole that passes through a portion of the interconnector may be formed at the bottom surface of the accommodating groove, and a through-hole that passes through the projection in a center axis direction of the projection may be formed in the projection.

One end of the projection, inserted into the unit cell, may be finished with an insulating material.

As described above, according to embodiments of the present invention, a cell bundle having cells connected in parallel and/or series can be easily configured.

Also, a prompt action on a cell bundle having a defect can be taken during the operation of the fuel cell.

That is, a cell bundle can be configured regardless of opened and closed interconnectors and the connection structure thereof, and maintenance and repair can be easily performed during the operation of the fuel cell.

The accompanying drawings, together with the specification, illustrate exemplary embodiments of the present invention, and, together with the description, serve to explain the principles of the present invention.
FIG. 1 is a longitudinal sectional view of a unit cell.
FIG. 2 is a cross-sectional view of the unit cell.
FIG. 3A is a perspective view showing the configuration of an interconnector for connecting unit cells in series.
FIG. 3B is a perspective view of a closed projection.
FIG. 3C is a longitudinal sectional view of the projection taken along the line V-V' in FIG. 3B.
FIG. 4 is a sectional view showing the configuration of the interconnector for connecting unit cells in series.
FIG. 5 is a sectional view showing a state that unit cells connected in series are coupled to interconnectors.
FIG. 6A is a perspective view of an opened projection.
FIG. 6B is a longitudinal sectional view showing another embodiment of the opened projection.
FIG. 6C is a sectional view of an opened interconnector for connecting unit cells in series.
FIG. 7 is a sectional view showing a state that unit cells connected in series are coupled to opened interconnectors.
FIG. 8 is a sectional view showing the configuration of a closed interconnector for connecting unit cells in parallel.
FIG. 9 is a sectional view showing a state that unit cells connected in parallel are coupled to closed interconnectors.

Hereinafter, a "tubular" unit cell refers to a cell-shaped unit cell formed in the shape of a hollow pipe regardless of the shape of a cross section thereof. That is, the shape of a cross section with respect to the central axis of the tubular unit cell may be formed in various shapes such as a circle and a polygon.

Unit cells are also referred to herein as fuel cell elements.

### First Embodiment

The first embodiment relates to a case where a serial interconnector is used. The serial interconnector of the first embodiment may be combined with an opened (or open-ended) interconnector which will be described in a second embodiment. However, in this embodiment, a closed (or close-ended) interconnector will be described. Thereafter, other types of interconnectors will be described.

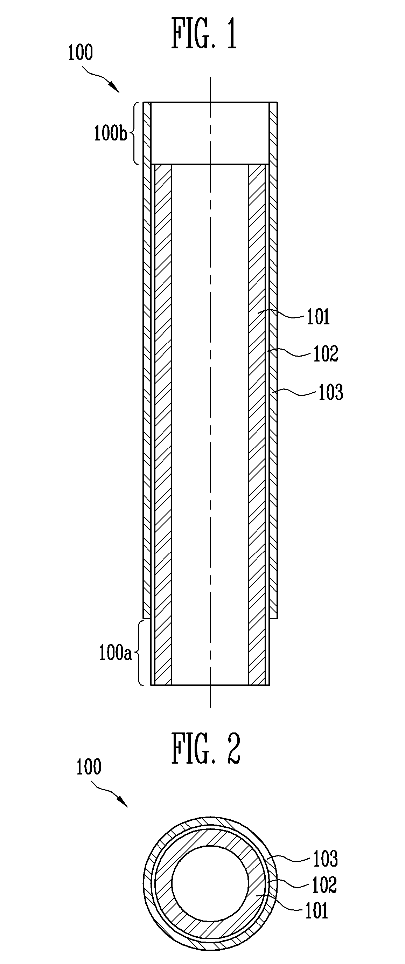

A unit cell 100 will be described with reference to FIG. 1. FIG. 1 is a longitudinal sectional view of a tubular unit cell.

The unit cell, or fuel cell element, 100 is a component that receives fuel reformed from a fuel converter (not shown) to produce electricity through an oxidation reaction. The unit cell 100 is formed in a tubular shape as shown in FIGS. 1 and 2. The tubular unit cell 100 has a structure in which a first electrode layer 101, an electrolytic (electrolyte) layer 102 and a second electrode layer 103 are stacked in a radial direction from the centre axis thereof. A plurality of unit cells 100 of FIG. 1 are provided as many as desired to be configured as a bundle. An exposed portion 100a having the first electrode layer 101 exposed therethrough is formed at one end of the unit cell 100, and an extended portion 100b formed by extending the second electrode layer 103 is formed at the other end of the unit cell 100.

The unit cell 100 is formed as an anode-supported or cathode-supported unit cell according to its application. In this embodiment, the unit cell 100 may be the anode-supported or cathode-supported unit cell. That is, the first electrode layer 101 may be an anode or cathode.

In one embodiment, the cathode is formed of a pure electron conductor or mixed conductor such as a LaMnO₃-based or LaCoO₃-based material, which has high ion and electron conductivity, stability under an oxygen atmosphere, and no chemical reaction with the electrolytic layer which will be described later. The electrolytic layer is a portion that serves as a path along which oxygen ions produced through the cathode and hydrogen ions produced through the anode, which will be described later, are moved. The electrolytic layer is made of a ceramic material having a compactness with which gas does not penetrate the ceramic material. In one embodiment, yttria stabilized zirconia (hereinafter, referred to as YSZ) obtained by adding a small amount of Y₂O₃ to ZrO₂ is used as the electrolytic layer. The YSZ is formed into a structure having high ion conductivity under oxidation and reduction atmospheres as well as chemical and physical stability. The anode is a portion to which hydrogen gas that is fuel of the fuel cell is supplied. The anode is basically made of a ceramic material such as YSZ. In one embodiment, a metal ceramic complex (cermet) such as NiO-8YSZ or Ni-8YSZ is used as the anode. Here, the metal ceramic complex (cermet) is economical and has suitable stability under a high-temperature reduction atmosphere.

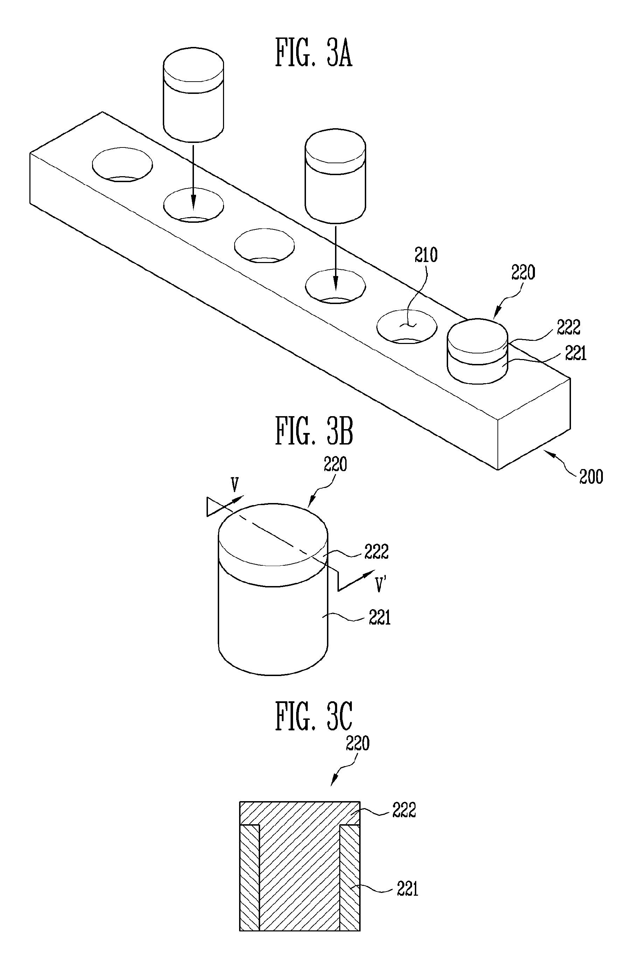

An interconnector 200 will be described with reference to FIG. 3A. FIG. 3A is a perspective view of a closed interconnector.

A pair of interconnectors 200 are provided to be respectively coupled to both ends of unit cells 100. A plurality of consecutive accommodating grooves, or recesses, 210 are formed in the body 240 of the interconnector 200. The accommodating groove 210 is formed to have a suitable shape and size (e.g., diameter) so that the exposed portion 100a of the unit cell 100 can be inserted into the accommodating groove 210 with a suitable small looseness.

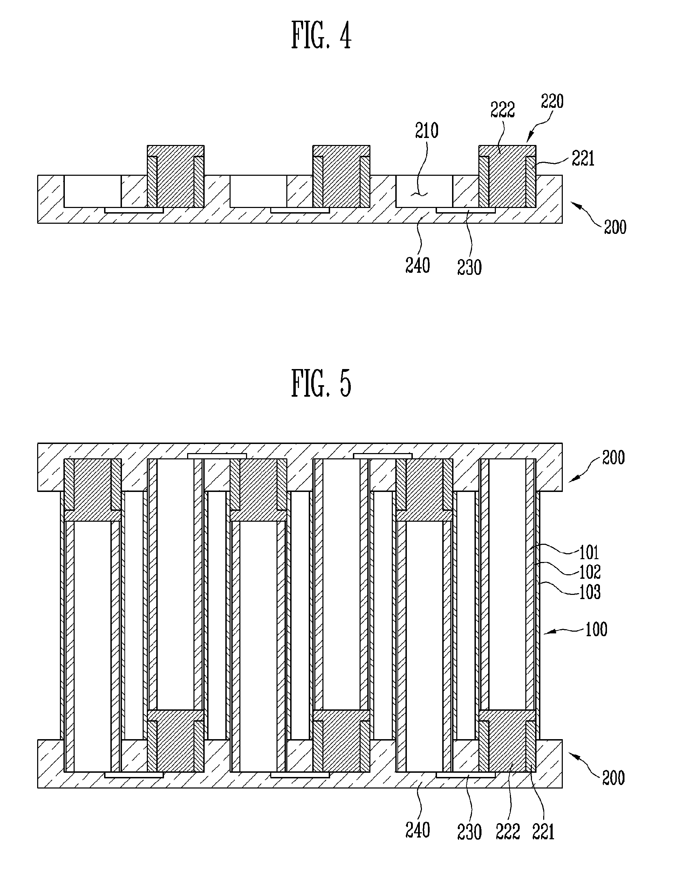

As shown in FIG. 4, a conductive connection member 230 is provided at a bottom surface of one accommodating groove 210 to be extended to a bottom surface of another accommodating groove 210 adjacent to the one accommodating groove 210. Here, the conductive connection member 230 does not connect the bottom surfaces of all the accommodating grooves 210 to one another but connects the bottom surfaces of a pair of accommodating grooves 210 to each other. The conductive connection member 230 may be formed of a single metal such as nickel, copper or silver with high conductivity, an alloy thereof, or an alloy thereof with a heterogeneous metal.

A projection 220 will be described with reference to FIGS. 3B and 3C. FIG. 3B is a perspective view of the closed projection 220. FIG. 3C is a sectional view of the projection 220 taken along line in FIG. 3B.

The projection 220 is formed to have the shape with a cross section substantially similar or identical to the accommodating groove 210 so that it can be inserted into the accommodating groove 210 with a suitable small looseness. Here, one portion of the projection 220 is inserted into the interior of the accommodating groove 210, and the other portion of the projection 220 is exposed. A conductive coating portion 221 is formed as an outer surface (e.g., circumferential surface) of the projection 220. An end portion of the projection 220, which is not inserted into the accommodating groove 210, may be finished with an insulating member so that the conductive coating portion 221 and an internal current collector (not shown) in the unit cell 100 are not short circuited. In one embodiment, the conductive coating portion 221 may be formed of a single metal such as nickel, copper or silver with high conductivity, an alloy thereof, or an alloy thereof with a heterogeneous metal.

The connection structure between the interconnector 200 and the projections 220 will be described with reference to FIG. 4. FIG. 4 is a sectional view of a closed serial interconnector. One projection 220 is inserted into every other one of the accommodating grooves 210 so as to constitute the serial interconnector 200. In FIG. 4, the conductive coating portion 221 comes in contact with the conductive connection portion 230 described above so that they are electrically connected to each other.

The connection structure of a unit cell bundle will be described with reference to FIG. 5. FIG. 5 is a sectional view showing the connection structure of a closed serial unit cell bundle.

A pair of interconnectors 200 are aligned so that accommodating grooves 210 and projections 220 face each other. A plurality of unit cells 100 are coupled to the pair of interconnectors 200 so that the exposed portion 100a (see FIG. 1) of each of the unit cells 100 is inserted into the accommodating groove 210, and the extended portion 100b (see FIG. 1) of each of the unit cells 100 accommodates the projection 220.

Further, the unit cell 100 is provided with current collectors with various shapes at the interior and/or exterior thereof so as to collect current in the operation of the fuel cell. In one embodiment, the internal current collector provided to the interior of the unit cell 100 is connected to the conductive connection member 230. The external current collector provided to the exterior of the unit cell 100 is connected to the conductive coating portion 221 of the projection 220 through a lower end of the extended portion 100b. In such a manner, the unit cells 100 are connected in series as many as required in the bundle.

### Second Embodiment

The second embodiment relates to a case where an opened serial interconnector is used. The opened interconnector described in this embodiment may be used to be properly combined with the closed interconnection described above. Here, a unit cell 100 of the second embodiment is identical to that of the first embodiment. Hereinafter, other components will be described.

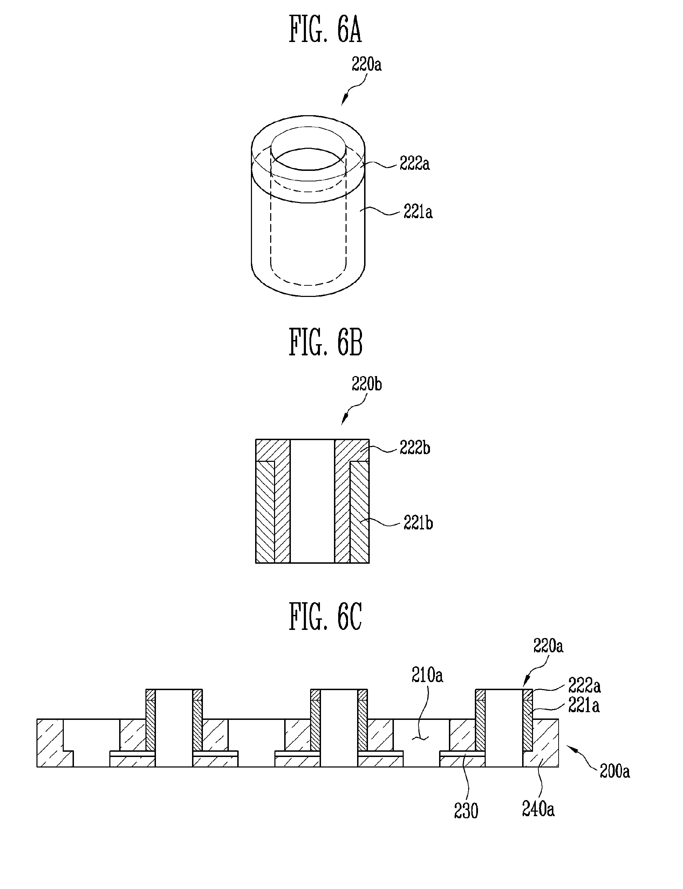

Projections according to other embodiments will be described with reference to FIGS. 6A and 6B. FIG. 6A is a perspective view of an opened projection 220a. FIG. 6B is a longitudinal sectional view showing another embodiment of the opened projection 220b.

The projection 220a is formed in a cylindrical shape, and a through-hole that passes through in the centre axis direction of the projection 220a is formed in the projection 220a. A lower portion of the projection 220a may be formed only with a conductive coating portion 221a as shown in FIG. 6A. Further, as shown in FIG. 6B, a projection 220b includes a conductive coating portion 221b formed only at a lower portion of an insulating portion 222b.

The connection structure between an interconnector 200a and the projections 220a will be described with reference to FIG. 6C. FIG. 6C is a sectional view of an opened interconnector for connecting unit cells in series. A through-hole that passes through a body portion 240a of the interconnector 200a is formed at the bottom surface of an accommodating groove 210a. Here, the size (e.g., diameter) of the through-hole is formed smaller than that of the accommodating groove 210. A conductive connection member 230 is formed so that bottom portions of adjacent accommodating grooves 210a are electrically connected to each other. In this embodiment, the conductive connection members 230 are formed between all the adjacent accommodating grooves 210a.

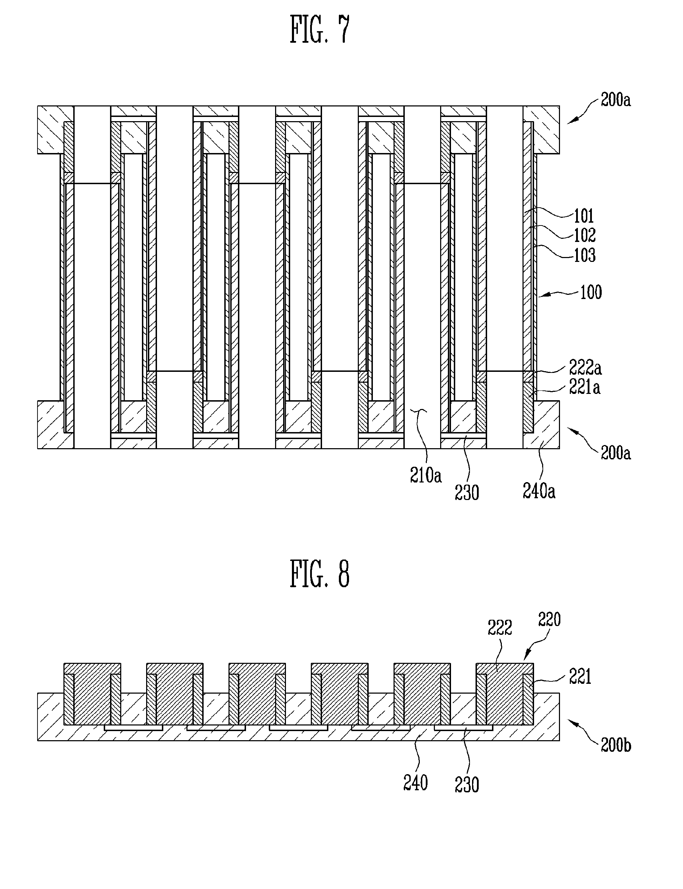

The connection structure of a unit cell bundle according to an embodiment will be described with reference to FIG. 7. FIG. 7 is a sectional view showing a state that unit cells 100 connected in series are coupled to opened interconnectors 200a.

A pair of interconnectors 200a are aligned so that accommodating grooves 210a and projections 220a face each other. The unit cells 100 are coupled to the pair of interconnectors 200a so that the exposed portion 100a (see FIG. 1) of each of the unit cells 100 is inserted into the accommodating groove 210a, and the extended portion 100b (see FIG. 1) of each of the unit cells 100 accommodates the projection 220a (see FIG. 6).

Like the first embodiment, an internal current collector provided to the interior of the unit cell 100 is connected to the conductive connection member 230. An external current collector provided to the exterior of the unit cell 100 is connected to the conductive coating portion 221a of the projection 220a through a lower end of the extended portion 100b. In such a manner, the unit cells 100 are connected in series as many as required in the bundle.

### Third Embodiment

The third embodiment relates to a parallel interconnector and a unit cell bundle having the same. Although a closed interconnector has been used in this embodiment, the opened interconnector described above may be used in the same manner.

Unit cells 100 and projections 220 of this embodiment are identical to those of the first embodiment, respectively. However, in a case where the opened interconnector is used, the projection 220 is changed to the projection 220a of the second embodiment.

An interconnector 200b will be described with reference to FIG. 8. FIG. 8 is a sectional view showing the configuration of a closed interconnector for connecting unit cells in parallel.

A pair of interconnectors 200b are provided to be respectively coupled to both ends of the unit cells 100. Accommodating grooves 210 substantially similar or identical to those of the first embodiment are formed in each of the interconnector 200b. Here, conductive connection members 230 are formed between all the adjacent accommodating grooves 210 so that bottom surfaces of the accommodating grooves 210 are electrically connected to one another. While, the projections 220 are not inserted into all the accommodating grooves 210 of one interconnector 200b, the projections 220 are inserted into all the accommodating grooves 210 of another interconnector 200b as shown in FIG. 8. The insertion direction of the projections 220 is substantially similar or identical to those of the first and second embodiments.

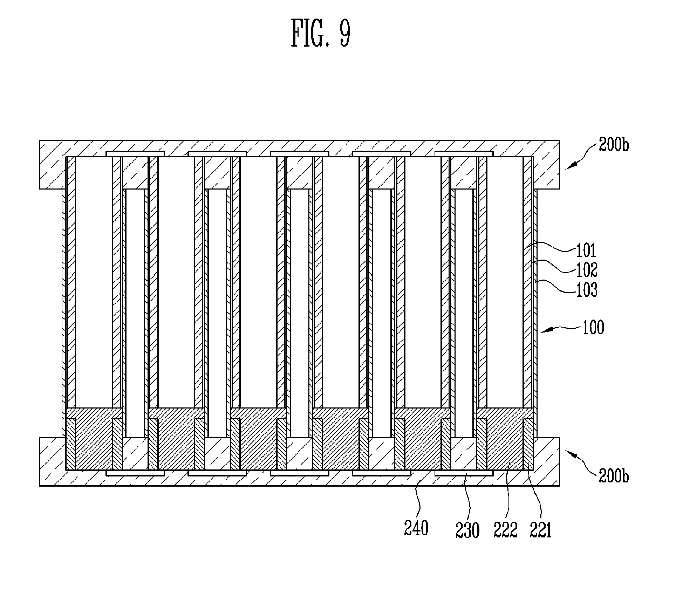

The connection structure between the unit cells 100 and the interconnectors 200b will be described with reference to FIG. 9. FIG. 9 is a sectional view showing a state that unit cells connected in parallel are coupled to closed interconnectors.

A pair of interconnectors 200b are aligned to face each other. A plurality of the unit cells 100 are coupled to the pair of interconnectors 200b so that the exposed portion 100a (see FIG. 1) of each of the unit cells 100 is inserted into the accommodating groove 210, and the extended portion 100b (see FIG. 1) of each of the unit cells 100 accommodates the projection 220. Like the first embodiment, an internal current collector provided to the interior of the unit cell 100 is connected to the conductive connection member 230. An external current collector provided to the exterior of the unit cell 100 is connected to the conductive coating portion 221 of the projection 220 through a lower end of the extended portion 100b (see FIG. 1). In such a manner, the unit cells 100 are connected in parallel as many as required in the bundle.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. An interconnector (200, 200a, 200b) for connecting a plurality of fuel cell elements, comprising:
a body (240, 240a) having a plurality of accommodating recesses (210, 210a) formed therein, the body having conductive connection members (230) that electrically connect interiors of the accommodating recesses; and
a plurality of projections (220, 220a, 220b) inserted into corresponding ones of the accommodating recesses, each of the projections having a conductive material (221, 221a, 221b) formed on an outer surface thereof.

2. The interconnector according to claim 1, wherein the conductive connection member (230) electrically connects a pair of the accommodating recesses to each other.

3. The interconnector according to claim 1 or 2, wherein the conductive connection member (230) electrically connects adjacent ones of the accommodating recesses.

4. The interconnector according to claim 3, wherein the conductive connection member passes through the body to electrically connect bottoms of adjacent ones of the accommodating recesses.

5. The interconnector according to any one of the preceding claims, wherein the body has a through-hole that passes through the body at a bottom surface of one of the accommodating recesses, and the projection has a through-hole for alignment with the through hole in the body.

6. The interconnector according to any one of the preceding claims, comprising an insulating material on one end of the projection.

7. The interconnector according to any one of the preceding claims, wherein the conductive connection member comprises at least one selected from the group consisting of nickel, copper, silver, and an alloy thereof.

8. The interconnector according to any one of the preceding claims, wherein the conductive material coated on the projection comprises at least one selected from the group consisting of nickel, copper, silver, and an alloy thereof.

9. A fuel cell comprising a bundle of fuel cell elements,
wherein the bundle comprises:
a pair of interconnectors each according to any one of the preceding claims,
wherein the projections are inserted into every other one of the accommodating recesses; and
a plurality of fuel cell elements disposed between the interconnectors.

10. The fuel cell according to claim 9, wherein each of the fuel cell elements are tubular and comprise a first electrode layer, an electrolytic layer and a second electrode layer stacked in a radial direction from a center axis thereof, wherein an exposed portion of the first electrode layer is located at one end of each of the fuel cell elements, and an extended portion of the second electrode layer extending beyond the first electrode layer is at the other end of each of the fuel cell elements,
wherein the exposed portion is inserted into a corresponding one of the accommodating recesses, and the extended portion accommodates a corresponding one of the projections so that the plurality of fuel cell elements are electrically connected in series to one another.

11. A fuel cell comprising a bundle of fuel cell elements, wherein the bundle comprises:
a pair of interconnectors each according to any one of claims 1 to 8, wherein the projections are inserted into all the accommodating recesses of one of the interconnectors; and
a plurality of fuel cell elements disposed between the interconnectors.

12. The fuel cell according to claim 11, wherein each of the fuel cell elements are tubular and comprise a first electrode layer, an electrolytic layer and a second electrode layer stacked in a radial direction from a center axis thereof, wherein an exposed portion of the first electrode layer is located at one end of each of the unit cells, and an extended portion of the second electrode layer extending beyond the first electrode layer is at the other end of each of the unit cells,
wherein each exposed portion is inserted into a corresponding one of the accommodating recesses and each extended portion accommodates a corresponding one of the projections so that the plurality of unit cells are electrically connected in parallel to one another.

13. The fuel cell according to any one of claims 9 to 12, wherein the conductive connection member is arranged to electrically connect the conductive material of adjacent ones of the projections to one another or to connect the conductive material of one of the projections to the first electrode layer (101) of the adjacent fuel cell element or to connect the first electrode layers (101) of the adjacent fuel cell elements together.

14. The fuel cell according to any one of claims 9 to 13, wherein through-holes in the body are aligned with through-holes in the projections.

15. The fuel cell according to any one of claims 9 to 14, wherein the insulating material at one end of the projection is arranged to butt up against the first electrode layer (101) and the electrolytic layer (102) to insulate the layers from the conductive material (221).
